# EUROPÄISCHE PATENTSCHRIFT

(11) **EP 1 642 784 B1**
(45) Veröffentlichungstag und Bekanntmachung des Hinweises auf die Patenterteilung: **10.12.2008**
(21) Anmeldenummer: 05019770.6
(22) Anmeldetag: 12.09.2005
(51) Int. Cl.: B60R 21/20, B29C 45/14

(54) **Verfahren zum Herstellen eines Fahrzeuginnenverkleidungsteils, sowie Fahrzeuginnenverkleidungsteil**
Manufacturing method for a car interior panel and car interior panel
Méthode de production pour l'habillage intérieur d'un véhicule et habillage intérieur d'un véhicule

(30) Priorität: 21.09.2004 DE 102004045757
(43) Veröffentlichungstag der Anmeldung: 05.04.2006
(73) Patentinhaber: TRW Automotive Safety Systems GmbH, 63743 Aschaffenburg (DE)
(72) Erfinder: Schütz, Dominik, 63857 Waldaschaff (DE); Heimberger, Manfred, 63857 Waldaschaff (DE); Missbach, Konrad, 63739 Aschaffenburg (DE)
(74) Vertreter: Kitzhofer, Thomas

(56) Entgegenhaltungen:
- EP-A- 0 835 788
- WO-A-00/34083
- DE-A1- 10 100 747
- US-A- 6 003 895
- US-A1- 2002 041 964

## Beschreibung

Die vorliegende Erfindung bezieht sich auf ein Verfahren zum Herstellen eines Fahrzeuginnenverkleidungsteils sowie ein Fahrzeuginnenverkleidungsteil.

Aus der US 5,685,056 ist ein Verfahren bekannt, bei dem in einem ersten Schritt eine großflächige Deckelplatte einer Gassackabdeckung aus Kunststoff gespritzt wird. In ein Loch in der Deckelplatte wird in einem zweiten Schritt ein Emblem gesteckt. Das Emblem besitzt dabei einen Fortsatz, der sich durch das Loch erstreckt und an der entgegengesetzten Seite aus der Deckelplatte herausragt. Der herausragende Abschnitt wird dann umgecrimpt, wodurch er sich an der entgegengesetzten Seite der Deckelplatte abstützt. Im Anschluß ist das Zierteil sicher an der Deckelplatte befestigt.

Der Nachteil dieses Verfahrens ist, daß mehrere Verfahrensschritte nötig sind, um ein solches Zierteil an einer Deckelplatte zu befestigen. Dies wiederum verursacht erhöhte Kosten, die vermieden werden sollen.

Aus der US 2002/0041964 A1 ist ein gattungsgemäßes Verkleidungsteil und ein Verfahren zum Herstellen einer Gassackabdeckung bekannt, bei dem eine vorgefertigte Außenhaut samt einem Emblem in eine Spritzform eingelegt und mit einer Trägerschicht hinterspritzt wird. Das Emblem wird dabei zwischen der Außenhaut und der Trägerschicht eingebettet und ist von der Außenseite aus als Kontur durch die Außenhaut erkennbar.

Die DE 101 00 747 A1 beschreibt ein Verfahren zum Herstellen einer Gassackabdeckung, bei dem eine folienüberzogene Plakette mit einem thermoplastischen Elastomer zur Bildung der Gassackabdeckung hinterspritzt wird, wobei die Erzeugung der Gassackabdeckung genügend Druck und Wärme hervorruft, um die Gassackabdeckung an der Grundfläche der folienüberzogenen Plakette zu befestigen.

Aus der US 6 003 895 A ist eine Gassackabdeckung mit einem Zierteil bekannt, das beim Spritzgießen der Abdeckung teilweise in diese eingebettet wird.

Die WO 00/34083 A1 offenbart eine Gassackabdeckung mit einer von außen sichtbaren Einlegerplatte, die mehrere Ausnehmungen aufweist, durch die beim Gießen der Abdeckung eine formschlüssige Verbindung der Einlegerplatte mit der Gassackabdeckung erreicht wird.

Erfindungsgemäß ist vorgesehen, daß das Zierteil schon beim Spritzen oder Schäumen der Deckelplatte mit dieser verbunden wird. Dabei ist vorgesehen, daß das Zierteil einen im verbauten Zustand sichtbaren Vorderteil und einen rückseitig davon abstehenden Verankerungsteil hat, wobei der Verankerungsteil einen sich unmittelbar an den Vorderteil anschließenden Abschnitt hat, der sich seitlich Schräg nach außen erstreckt, und das Zierteil in einer Spritz- oder Schäumform positioniert wird. Im folgenden wird das Zierteil unter Bildung der Deckelplatte so umspritzt oder umschäumt, daß der Verankerungsteil wenigstens abschnittsweise in diese eingebettet wird und sich der Abschnitt schräg nach außen und zur Rückseite der Deckelplatte in die Deckelplatte hinein erstreckt. Somit werden bei der Herstellung der Deckelplatte diese und das Zierteil verbunden, was das Verfahren beschleunigt und billiger gestaltet.

Da insbesondere ein Zierteil aus Metall aufgrund des Gewichts fest an der Deckelplatte befestigt sein muß, weist der Verankerungsteil einen sich unmittelbar an den Vorderteil anschließenden Abschnitt auf, der sich seitlich nach außen in die Deckelplatte erstreckt. Somit wird ein Lösen des Zierteils in Richtung Fahrzeuginnenraum verhindert. Dieser sich an den Vorderteil anschließende Abschnitt verläuft schräg nach außen und zur Rückseite, so daß sich ein konisch nach außen zulaufender Querschnitt ergibt.

Der Verankerungsteil kann dabei auf verschiedene Weisen ausgeführt sein. Beispielsweise kann der Verankerungsteil eine Hinterschneidung besitzen, in die beim Spritzen oder Schäumen flüssiger Kunststoff fließt. Der Verankerungsteil wird hierdurch insgesamt schmaler, wodurch das Zierteil auch leichter wird. Außerdem wird eine formschlüssige Verbindung zwischen Zierteil und Deckelplatte gewährleistet, so daß bei Druckbeaufschlagung von außen auf das Zierteil, zum Beispiel durch einen Fahrzeuginsassen, das Zierteil nicht hineingedrückt werden kann.

Das Zierteil kann so in der Deckelplatte positioniert sein, daß der Verankerungsteil nicht gegenüber der Deckelplatte vorsteht, d.h. daß er komplett in der Deckelplatte eingebettet ist.

Beim erfindungsgemäßen Verfahren kann vorgesehen sein, daß die Spritz- oder Schäumform eine Vertiefung hat, die beim Positionieren des Zierteils den Vorderteil aufnimmt. Nach dem Spritzen/Schäumen der Deckelplatte ist das Fahrzeuginnenverkleidungsteil aufgrund des dann teilweise herausstehenden Zierteils also nicht mehr eben, was einen qualitativ hochwertigeren Gesamteindruck hinterläßt. Ein Fahrzeuginsasse kann das Zierteil somit auch fühlen.

Das erfindungsgemäße Fahrzeuginnenverkeidungsteil wird durch das zuvor beschriebene Verfahren hergestellt.

Gemäß der bevorzugten Ausführungsform ist vorgesehen, daß das Zierteil quer zur Sichtfläche der Deckelplatte und senkrecht hierzu formschlüssig in die Deckelplatte eingebettet ist, was eine Verschiebung oder ein Herauslösen des Zierteils verhindert.

Bei dem erfindungsgemäßen Fahrzeuginnenverkleidungsteil ist das Zierteil ohne ein zusätzliches Befestigungsmittel an der Deckelplatte befestigt. Hierdurch entfällt ein zusätzlicher Montageschritt, es ist also kein zusätzliches Anschrauben oder Vernieten des Zierteils notwendig.

Ein besonders hochwertiger Eindruck entsteht dadurch, daß das Zierteil aus Metall besteht.

Weitere Merkmale und Vorteile der Erfindung ergeben sich aus der nachfolgenden Beschreibung einiger bevorzugter Ausführungsformen und aus den beigefügten Zeichnungen, auf die Bezug genommen wird. Es zeigt:
- Figur 1 ein nach dem erfindungsgemäßen Verfahren hergestelltes erfindungsgemäßes Fahrzeuginnenverkleidungsteil in Vorderansicht;
- Figur 2 eine Form zum Herstellen des erfindungsgemäßen Fahrzeuginnenverkleidungsteils mit darin angebrachten Zierteilen;
- Figur 3 einen Schnitt durch die Fahrzeuginnenverkleidung längs der Linie III-III in Fig. 1;
- Figur 4 einen entsprechenden Schnitt durch eine Fahrzeuginnenverkleidung gemäß einer zweiten Ausführungsform; und
- Figur 5 einen entsprechenden Schnitt durch eine Fahrzeuginnenverkleidung gemäß einer dritten Ausführungsform.

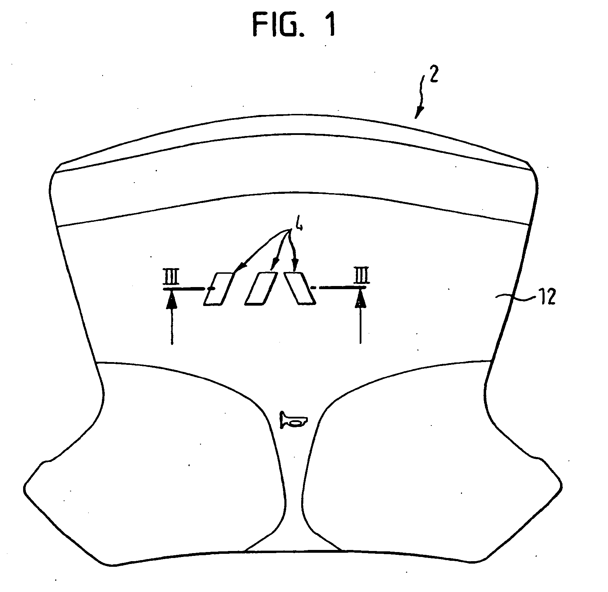

Figur 1 zeigt ein Fahrzeuginnenverkleidungsteil in Form einer Gassackabdeckung 2, bestehend aus einer Deckelplatte 12 und vorderseitig sichtbaren Zierteilen 4.

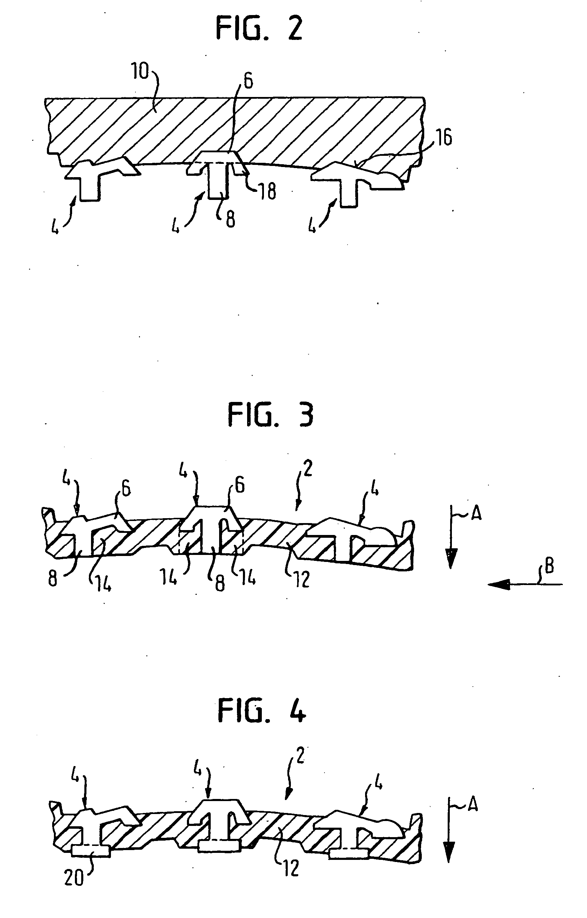

Figur 2 zeigt das Oberteil einer Spritz- oder Schäumform 10, um die in Figur 1 dargestellte Gassackabdeckung 2 herzustellen. Die Schäumform 10 besitzt Vertiefungen 16, in welche die Zierteile 4 vor dem Umspritzen oder Umschäumen teilweise hineinragen, um positioniert zu werden. Dabei läßt sich jedes Zierteil 4 in zwei imaginäre Abschnitte aufteilen, einen Vorderteil 6 und einen Verankerungsteil 8. Der Vorderteil 6 ist dabei komplett in der zur Vorderseite komplementären Vertiefung 16 der Schäumform 10 untergebracht, und der Verankerungsteil 8 liegt außerhalb der Vertiefung 16. Der Verankerungsteil 8 hat einen unmittelbar an den Vorderteil 6 anschließenden Abschnitt 18, welcher sich vorzugsweise schräg nach außen und zur Rückseite der Deckelplatte 12 hin erstreckt, d.h., der "Kopf" des Zierteils 4 läuft in Richtung zur Vorderseite schräg zu.

In einem folgenden Schritt wird die großflächige Deckelplatte 12 durch Schäumen oder Spritzen hergestellt. Beim Schäumen/Spritzen wird der Verankerungsteil 8 jedes Zierteils 4 vom flüssigen Kunststoff umgeben. Dabei wird der Verankerungsteil 8 des Zierteils 4 teilweise oder komplett in den die Deckelplatte 12 bildenden Kunststoff eingebettet.

Die fertige Gassackabdeckung 2, bestehend aus der Deckelplatte 12 und den Zierteilen 4, ist in Figur 3 dargestellt. Die Deckelplatte 12 hat dabei eine im Verhältnis zu den Zierteilen 4 große Ausdehnung (siehe auch Figur 1). Aufgrund der Vertiefung 16 in der Schäumform 10 steht bei der fertigen Gassackabdeckung 2 das Zierteil 4 in Richtung zur Vorderseite um ein gewisses Maß über die Deckelplatte 12 hinaus. Dieses Maß entspricht der Höhe der Vertiefung 16. In dem Fall, daß keine Vertiefung 16 in der Schäumform 10 vorgesehen ist, schließt das Zierteil 4 mit der Deckelplatte 12 bündig ab. D. h., in Blickrichtung B wäre keine Höhendifferenz zwischen der Oberfläche des Zierteils 4 und der Oberfläche der Deckelplatte 12 sichtbar.

In Figur 3 ist auch ein Hinterschneidung 14 der Zierteile 4, bezogen auf die Richtung A, erkennbar, die komplett von dem Kunststoff ausgefüllt wird. Figur 3 zeigt auch, daß die Zierteile 4 spaltfrei in der Deckelplatte 12 eingebettet sind.

Es sind außer Metall noch andere Materialien für das Zierteil 4 denkbar, z.B. Kunststoff oder Holz. Diese Materialien können wie gewünscht gefärbt oder lackiert werden. Beim Einsatz eines Zierteils 4 aus Kunststoff könnte dieses auch mit einer metallischen Oberfläche ausgestattet werden.

Figur 4 zeigt eine zweite Ausführungsform der Gassackabdeckung 2, bei welcher die Zierteile 4 ein zusätzliches Halteelement 20 aufweisen. Ein solches Halteelement 20 könnte dann eingesetzt werden, wenn eine möglichst stabile Verankerung des Zierteils 4 in der Deckelplatte 12 gewünscht wird.

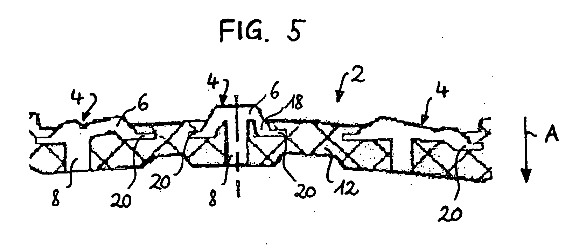

Alternativ oder zusätzlich können ebenso die schräg nach außen verlaufenden Abschnitte 18 mit vorzugsweise senkrecht zur Mittelachse der Verankerungsteile verlaufenden Halteelementen 20 versehen sein (siehe Figur 5).

Eine andere Möglichkeit wäre auch, das Zierteil 4 so mit Widerhaken auszustatten, daß ein Lösen des Zierteils 4 in und entgegen Richtung A erschwert wird. Natürlich ist auch denkbar, das Zierteil 4 mit einer zusätzlichen Befestigungsvorrichtung an der Deckelplatte 12 zu sichern. Hierbei könnte die Kombination aus einer Unterlegscheibe und einer Schraube verwendet werden, wobei die Schraube am Zierteil 4 angreift und die Unterlegscheibe ein Lösen des Zierteils 4 erschwert.

Die Zierteile 4, genauer deren Verankerungsteile 8, können über ein Verbindungsglied miteinander verbunden sein. Hierdurch lassen sich die Zierteile 4 einfacher und schneller in der Schäumform positionieren. Außerdem bewirkt das Verbindungsglied nach der Umschäumung einen stärkeren Halt in der Deckelplatte 12.

Weiterhin kann die Oberfläche des Verankerungsteils 8 des Zierteils 4 so ausgebildet sein, daß sie eine möglichst hohe Rauheit besitzt. Dies kann in Verbindung mit dem umgebenden Kunststoff für einen verbesserten Halt des Zierteils 4 in der Deckelplatte 12 sorgen.

## Patentansprüche

1. Fahrzeuginnenverkleidungsteil, insbesondere Gassackabdeckung (2), mit
einem Zierteil (4), das einen im verbauten Zustand sichtbaren Vorderteil (6) und einen rückseitig davon abstehenden Verankerungsteil (8) hat, der einen sich unmittelbar an den Vorderteil (6) anschließenden Abschnitt (18) hat, und
einer durch tellweises Umspritzen bzw. Umschäumen des Zierteils (4) gebildeten Deckelplatte (12), wobei der Verankerungsteil (8) wenigstens abschnittsweise in die Deckelplatte (12) eingebettet ist,
**dadurch gekennzeichnet, daß** der Abschnitt (18) sich seitlich schräg nach außen und zur Rückseite der Deckelplatte (12) in die Deckelplatte (12) hinein erstreckt, so daß eine formschlüssige Verbindung zwischen Zierteil (4) und Deckelplatte (12) gewährleitet ist.

2. Fahrzeuginnenverkleidungsteil nach Anspruch 1, **dadurch gekennzeichnet, daß** das Zierteil (4) quer zur Sichtfläche der Deckelplatte (12) und senkrecht hierzu formschlüssig in die Deckelplatte (12) eingebettet ist.

3. Fahrzeuginnenverkleidungsteil nach Anspruch 1 oder 2, **dadurch gekennzeichnet, daß** das Zierteil (4) ohne ein zusätzliches Befestigungsmittel an der Deckelplatte (12) befestigt ist.

4. Fahrzeuginnenverkleidungsteil nach einem der Ansprüche 1 bis 3, **dadurch gekennzeichnet, daß** das Zierteil (4) spaltfrei in der Deckelplatte (12) befestigt ist.

5. Fahrzeuginnenverkleidungsteil nach einem der Ansprüche 1 bis 4, **dadurch gekennzeichnet, daß** das Zierteil (4) aus Metall besteht

6. Fahrzeuginnenverkleidungsteil nach einem der Ansprüche 1 bis 5, **dadurch gekennzeichnet, daß** es eine Gassackabdeckung (2) ist und die Deckelplatte (12) eine im Verhältnis zum Zierteil (4) große Ausdehnung besitzt.

7. Verfahren zum Herstellen eines Fahrzeuginnenverkleidungsteils nach einem der vorhergehenden Ansprüche, insbesondere einer Gassackabdeckung (2), **gekennzeichnet durch** die folgenden Schritte:
- Positionieren eines Zierteils (4), das einen im verbauten Zustand sichtbaren Vorderteil (6) und einen rückseitig davon abstehenden Verankerungsteil (8) hat,
wobei der Verankerungsteil (8) einen sich unmittelbar an den Vorderteil (6) anschließenden Abschnitt (18) hat, der sich seitlich schräg nach außen erstreckt, in einer Spritz- oder Schäumform (10), und
- teilweises Umspritzen bzw. Umschäumen des Zierteils (4) unter Bildung einer Deckelplatte (12), so daß der Verankerungsteil (8) wenigstens abschnittsweise in die Deckelplatte (12) eingebettet wird und sich der Abschnitt (18) schräg nach außen und zur Rückseite der Deckelplatte (12) in die Deckelplatte (12) hinein erstreckt.

8. Verfahren nach Anspruch 7, **dadurch gekennzeichnet, daß** der Verankerungsteil (8) eine Hinterschneidung (14) besitzt, in die beim Spritzen oder Schäumen flüssiger Kunststoff fließt.

9. Verfahren nach einem der Ansprüche 7 und 8, **dadurch gekennzeichnet, daß** der Verankerungsteil (8) nicht gegenüber der Deckelplatte (12) vorsteht.

10. Verfahren nach einem der Ansprüche 7 bis 9, **dadurch gekennzeichnet, daß** die Spritz- oder Schäumform (10) eine Vertiefung (16) hat, die beim Positionieren des Zierteils (4) den Vorderteil (6) aufnimmt, so daß der Vorderteil (6) wenigstens abschnittsweise gegenüber der Deckelplatte (12) nach außen vorsteht.

## Claims

1. A vehicle interior paneling part, in particular a gas bag cover (2), comprising:
a decorative part (4) having a front part (6) that is visible in the installed state and an anchor part (8) that extends therefrom on the reverse side and has a section (18) that immediately adjoins the front part (6), and
a cover plate (12) formed by partial injection- or foam-molding around the decorative part (4), the anchor part (8) being at least partially embedded in the cover plate (12),
**characterized in that** the section (18) extends laterally obliquely outwards and towards the reverse side of the cover plate (12) into the cover plate (12), so that a form-locking connection between the decorative part (4) and the cover plate (12) is ensured.

2. The vehicle interior paneling part according to claim 1, **characterized in that** the decorative part (4) is embedded in the cover plate (12) in a form-locking manner transversely to the visible surface of the cover plate (12) and perpendicularly thereto.

3. The vehicle interior paneling part according to claim 1 or 2, **characterized in that** the decorative part (4) is attached to the cover plate (12) without an additional attachment means.

4. The vehicle interior paneling part according to any of claims 1 to 3, **characterized in that** the decorative part (4) is attached in the cover plate (12) without a gap.

5. The vehicle interior paneling part according to any of claims 1 to 4, **characterized in that** the decorative part (4) is made of metal.

6. The vehicle interior paneling part according to any of claims 1 to 5, **characterized in that** it is a gas bag cover (2), and the cover plate (12) has a dimension that is large in relation to the decorative part (4).

7. A method of manufacturing a vehicle interior paneling part according to any of the preceding claims, in particular a gas bag cover (2), **characterized by** the following steps:
- positioning a decorative part (4) in an injection or foaming mold (10), the decorative part having a front part (6) that is visible in the installed state and an anchor part (8) that extends therefrom on the reverse side, the anchor part (8) having a section (18) that immediately adjoins the front part (6) and extends laterally obliquely outwards, and
- partial injection- or foam-molding around the decorative part (4) to form a cover plate (12), so that the anchor part (8) is at least partially embedded into the cover plate (12) and the section (18) extends obliquely outwards and towards the reverse side of the cover plate (12) into the cover plate (12).

8. The method according to claim 7, **characterized in that** the anchor part (8) has an undercut (14) into which liquid plastic flows during the injection- or foam-molding process.

9. The method according to either of claims 7 and 8, **characterized in that** the anchor part (8) does not protrude in relation to the cover plate (12).

10. The method according to any of claims 7 to 9, **characterized in that** the injection or foaming mold (10) has a recess (16) which, when the decorative part (4) is positioned, accommodates the front part (6), so that the front part (6) at least partially protrudes outwards in relation to the cover plate (12).

## Revendications

1. Pièce d'habillage intérieur de véhicule, en particulier recouvrement de coussin à gaz (2), comportant
une partie décorative (4) qui possède une partie antérieure (6) visible à l'état monté et une partie d'ancrage (8) faisant saillie depuis celle-ci sur la face postérieure, laquelle possède un tronçon (18) se raccordant directement à la partie antérieure (6), et
une plaque de couvercle (12) formée par enrobage par injection ou moussage de la partie décorative (4), la partie d'ancrage (8) étant noyée au moins par tronçons dans la plaque de couvercle (12),
**caractérisée en ce que** le tronçon (18) s'étend latéralement en oblique vers l'extérieur et vers la face postérieure de la plaque de couvercle (12) jusque dans la plaque de couvercle (12), de telle sorte qu'une liaison par coopération de formes entre la partie décorative (4) et la plaque de couvercle (12) est assurée.

2. Pièce d'habillage intérieur de véhicule selon la revendication 1, **caractérisée en ce que** la partie décorative (4) est noyée par coopération de formes dans la plaque de couvercle (12) transversalement à la surface visible de la plaque de couvercle (12) et perpendiculairement à celle-ci.

3. Pièce d'habillage intérieur de véhicule selon la revendication 1 ou 2, **caractérisée en ce que** la partie décorative (4) est fixée sur la plaque de couvercle (12) sans un moyen de fixation additionnel.

4. Pièce d'habillage intérieur de véhicule selon l'une des revendications 1 à 3, **caractérisée en ce que** la partie décorative (4) est fixée sans jeu dans la plaque de couvercle (12).

5. Pièce d'habillage intérieur de véhicule selon l'une des revendications 1 à 4, **caractérisée en ce que** la partie décorative (4) est en métal.

6. Pièce d'habillage intérieur de véhicule selon l'une des revendications 1 à 5, **caractérisée en ce qu'**il s'agit d'un recouvrement de coussin à gaz (2) et que la plaque de couvercle (12) possède une extension de grande taille par rapport à la partie décorative (4).

7. Procédé de fabrication d'une pièce d'habillage intérieur de véhicule selon l'une des revendications précédentes, en particulier d'un recouvrement de coussin à gaz (2), **caractérisé par** les étapes suivantes :
- positionner dans un moule de moulage par injection ou de moussage (10) une partie décorative (4) qui possède une partie antérieure (6) visible à l'état monté et une partie d'ancrage (8) faisant saillie depuis celle-ci sur la face postérieure, la partie d'ancrage (8) possédant un tronçon (18) se raccordant directement à la partie antérieure (6), qui s'étend latéralement en oblique vers l'extérieur, et
- enrober par injection ou mousser partiellement la partie décorative (4), respectivement, en formant une plaque de couvercle (12) de telle sorte que la partie d'ancrage (8) est noyée au moins par tronçons dans la plaque de couvercle (12) et que le tronçon (18) s'étend en oblique vers l'extérieur et vers la face postérieure de la plaque de couvercle (12) jusque dans la plaque de couvercle (12).

8. Procédé selon la revendication 7, **caractérisé en ce que** la partie d'ancrage (8) possède une contre-dépouille (14) dans laquelle s'écoule de la matière plastique liquide lors de l'enrobage par injection ou lors du moussage.

9. Procédé selon l'une des revendications 7 et 8, **caractérisé en ce que** la partie d'ancrage (8) ne fait pas saillie par rapport à la plaque de couvercle (12).

10. Procédé selon l'une des revendications 7 à 9, **caractérisé en ce que** le moule d'enrobage par injection ou de moussage (10) possède un renfoncement (16) qui, lors du positionnement de la partie décorative (4), reçoit la partie antérieure (6) de telle sorte que la partie antérieure (6) fait saillie au moins par tronçons vers l'extérieur par rapport à la plaque de couvercle (12).
